# EUROPEAN PATENT APPLICATION

(11) **EP 4 130 958 A1**
(43) Date of publication of application: **08.02.2023**
(21) Application number: 21780669.4
(22) Date of filing: 27.01.2021
(51) Int. Cl.: G06F 3/0484

(54) **DATA TRANSMISSION METHOD AND APPARATUS, AND WEARABLE DEVICE AND STORAGE MEDIUM**

(30) Priority: 30.03.2020 CN 202010236144
(71) Applicant: GUANGDONG OPPO MOBILE TELECOMMUNICATIONS CORP., LTD., Dongguan, Guangdong 523860 (CN)
(72) Inventor: GAO, Jinze, Dongguan, Guangdong 523860 (CN)
(74) Representative: Ipside
(86) International application number: PCT/CN2021/073920
(87) International publication number: WO 2021/196842

(57) **Abstract**

A data transmission method, comprising: obtaining the type of data to be transmitted, detecting current screen state information of a wearable device, and determining said data according to the current screen state information of the wearable device and the type of said data, and transmitting said data from a first operating system of the wearable device to a second operation system of the wearable device, the power consumption of the first operation being lower than that of the second operation system.

## Description

### CROSS REFERENCE TO RELATED APPLICATIONS

The present application claims priority to Chinese Patent Application No. 202010236144.2, filed on March 30, 2020, titled "DATA TRANSMISSION METHOD, DATA TRANSMISSION DEVICE, WEARABLE APPARATUS, AND STORAGE MEDIUM", the contents of which are herein incorporated by reference in its entirety.

### TECHNICAL FIELD

The present disclosure relates to a technical field of electronic apparatuses, in particular to a data transmission method, a data transmission device, a wearable apparatus, and a storage medium.

### BACKGROUND

In recent years, with the rapid development of electronic device technology, some wearable apparatuses support dual-system operation. The dual-system operation means that two operation systems are configured in the wearable apparatus, and the two operation systems are independent of each other and do not affect each other. In addition, data interaction is needed to perform between the two operation systems.

However, when the two operation systems perform the data interaction, a data transmission disorder often occurs.

### SUMMARY

Embodiments of the present disclosure provide a data transmission method, a data transmission device, a wearable apparatus, and a computer-readable storage medium.

A data transmission method is provided, and includes: obtaining a type of data to be transmitted; detecting current screen state information of a wearable apparatus; and determining data to be transmitted according to the current screen state information of a wearable apparatus and the type of data to be transmitted, and transmitting the data to be transmitted from a first operation system of the wearable apparatus to a second operation system of the wearable apparatus, a power consumption of the first operation system is lower than a power consumption of the second operation system.

A data transmission device is provided, and includes an obtaining module, a detection module, and a transmission module; the obtaining module is configured to obtain a type of data to be transmitted; the detection module is configured to detect current screen state information of a wearable apparatus; and the transmission module is configured to determine the data to be transmitted according to the current screen state information of the wearable apparatus and the data type to be transmitted and transmit the data to be transmitted from a first operation system of the wearable apparatus to a second operation system; a power consumption of the first operation system is lower than a power consumption of the second operation system.

A wearable apparatus is provided, and includes a memory and a processor. The memory stores a computer program, and the processor executes the computer program to perform operations in above data transmission method.

A computer-readable storage medium is provided, and stores a computer program. The program is executed by a processor to implement operations in above data transmission method.

Embodiments of the present disclosure include: obtaining a type of data to be transmitted; detecting current screen state information of a wearable apparatus; and determining the data to be transmitted according to the current screen state information of the wearable apparatus and the data type to be transmitted, and transmitting the data to be transmitted from a first operation system of the wearable apparatus to a second operation system of the wearable apparatus; a power consumption of the first operation system is lower than a power consumption of the second operation system. In this way, orderly transmission of data between the two operation systems is implemented by controlling the data transmitting between the first operation system and the second operation system according to the type of data to be transmitted and the screen state information of the wearable apparatus.

### BRIEF DESCRIPTION OF THE DRAWINGS

In order to more clearly illustrate technical solutions in the embodiments of the present disclosure or related art, the following is a brief description of the drawings used in the description of the present disclosure or related art. Obviously, the drawings are only some embodiments of the present disclosure. For those of ordinary skill in the art, other drawings may be obtained from these drawings without creative effort.
FIG. 1 is a flowchart of a data transmission method according to an embodiment of the present disclosure.
FIG. 2 is a structural block diagram of a wearable apparatus according to an embodiment of the present disclosure.
FIG. 3 is a flowchart of reporting data of a first data type according to an embodiment of the present disclosure.
FIG. 4 is a detailed flowchart of determining data to be transmitted according to an embodiment of the present disclosure.
FIG. 5 is a detailed flowchart of determining data to be transmitted according to another embodiment of the present disclosure.
FIG. 6 is a detailed flowchart of determining data to be transmitted according to another embodiment of the present disclosure.
FIG. 7 is a flowchart of reporting data of a second data type according to an embodiment of the present disclosure.
FIG. 8 is a flowchart of restarting a first operation system according to an embodiment of the present disclosure.
FIG. 9 is a flowchart of restarting a first operation system according to another embodiment of the present disclosure.
FIG. 10 is a flowchart of restarting a first operation system according to an embodiment of the present disclosure.
FIG. 11 is a structural block diagram of a data transmission device according to an embodiment of the present disclosure.
FIG. 12 is a structural block diagram of an interior of a wearable apparatus according to an embodiment of the present disclosure.

### DETAILED DESCRIPTION

In order to make purposes, technical solutions and advantages of the present disclosure clearer and more understandable, the following is a further detailed description of the present disclosure in conjunction with the drawings and embodiments. It should be understood that embodiments described herein are intended only to explain the present disclosure and are not intended to limit the present disclosure.

A wearable apparatus according to some embodiments of the present disclosure may be a wearable apparatus (including product such as a watch, a bracelet, a wristband, etc.) supported by a wrist, a wearable apparatus (such as shoes, socks, and other products wearing on legs) supported by a foot, a wearable apparatus (including an eyewear, a helmet, a headband, a headphone, etc.) supported by a head, and wearable apparatuses with various kinds of shape such as a clothing, a school bag, a crutch, an accessory, etc. The wearable apparatus may support the dual-system operation. One of the two operation system is supported by a first chip, and the other of the two operation systems is supported by a second chip. Each of the first chip and the second chip can use a microcontroller unit (MCN). In some embodiments, a power consumption of the first chip is lower than a power consumption of the second chip.

In some embodiments, the wearable apparatus firstly obtains a type of data to be transmitted, secondly detects current screen state information of the wearable apparatus, and thirdly determines the data to be transmitted according to the current screen state information of the wearable apparatus and the type of data to be transmitted and transmits the data to be transmitted from a first operation system of the wearable apparatus to a second operation system of the wearable. A power consumption of the first operation system is lower than a power consumption of the second operation system.

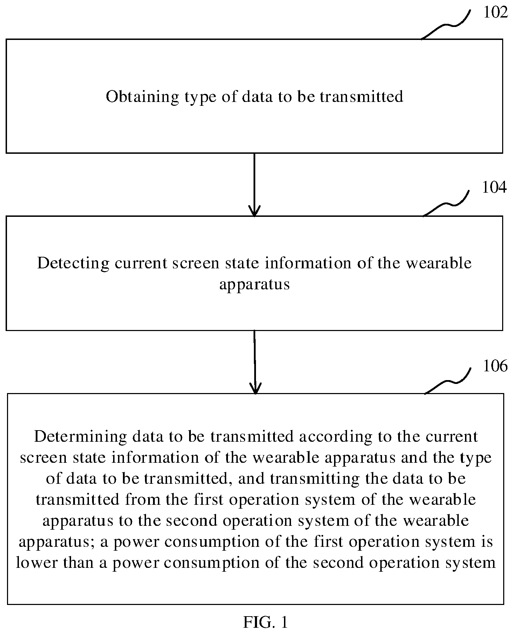

FIG. 1 is a flowchart of a data transmission method according to an embodiment of the present disclosure. The data transmission method as shown in FIG. 1 may be applied to the wearable apparatus. The data transmission method may include following operations.

Operation 102 may include: obtaining the type of data to be transmitted.

The data to be transmitted is data transmitted from the first operation system to the second operation system. The first operation system and the second operation system are all operation systems of the wearable apparatus. The power consumption of the first operation system is lower than the power consumption of the second operation system. In other words, the first operation system may be used to implement an ultra-long standby, and the second operation system may be used to implement offering a more complete function.

In some embodiments, the first operation system may be real-time operation system (RTOS). The RTOS may run and manage a system resource according to an order, and provide a consistent base. The RTOS has a real-time characteristic. In other words, the ROTS may perform a task immediately in response to the task needing to be performed. The second operation system may be Android system, iPhone operation system (IOS), Windows Phone system, BlackBerry operation system (BlackBerry OS), and Tizen system.

In some embodiments, the first operation system may be supported by the first chip, the second operation system may be supported by the second chip, and the power consumption of the first chip is less than power consumption of the second chip. That is, the first operation system may be supported by a coprocessor, and the second operation system may be supported by a main processor. The coprocessor and the main processor may work independently.

In some embodiments, the wearable apparatus may be used with an application program of a mobile terminal through a Bluetooth. The first operation system communicates with the mobile terminal through a first Bluetooth, and the second operation system communicates with the mobile terminal through a second Bluetooth. A power consumption of the first Bluetooth is lower than a power consumption of the second Bluetooth. The first Bluetooth may be a Bluetooth Low Energy (BLE), and the second Bluetooth may be a classic Bluetooth with Basic Rate or Enhanced Data Rate (BR/EDR).

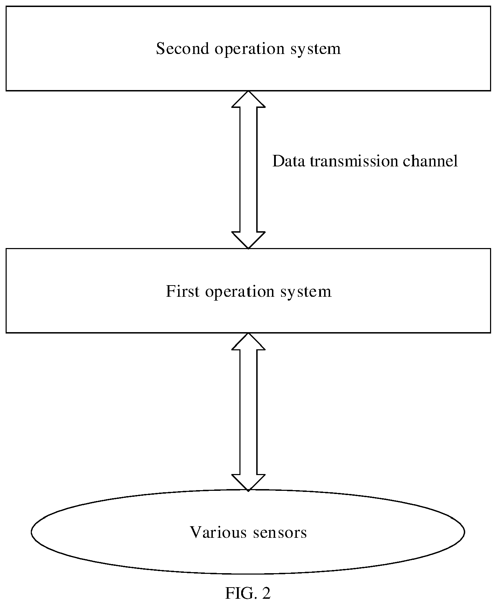

In some embodiments, as shown in FIG. 2, the first operation system may be configured to collect data in various sensors of the wearable apparatus, process the data in the various sensors to obtain the data to be transmitted, and report the data to be transmitted to the second operation system, so that the second operation system displays the data to be transmitted. The sensors may include an acceleration sensor, a gyroscope sensor, a geomagnetic sensor, a heart rate sensor, a blood oxygen sensor and so on. The data to be transmitted may be heart rate, altitude, steps, distance, speed, calories, step rate and so on.

In some embodiments, the type of data to be transmitted may include a first data type and a second data type. The first data type may be a data collected during a preset period, and the second data type may be a data collected during a predetermined period. The preset period and the predetermined period may be set based on a practical application. Optionally, the predetermined period may be at least twice as long as the preset period. Data of the second data type may be determined based on the data of the first data type. Optionally, the first data type may be real-time data and collected once per one second. The first data type may have a real-time characteristic and provide real-time data for users. The second data type may be detail data and collected once per three seconds. The second data type may have an accumulated characteristic and provide accumulated data and changed data for the users during a period of time. The accumulated data and the changed data may be displayed through a chart.

In some embodiments, an interval of reporting the first data type and the second data type to the second operation system may be set. Optionally, an interval of reporting the first data type to the second operation system may be a preset interval, and an interval of reporting the second data type to the second operation system may be a predetermined interval. The preset interval and the predetermined interval may be set based on practical application.

In some embodiments, the wearable apparatus may obtain the type of data to be transmitted.

Operation 104 may include: detecting the current screen state information of the wearable apparatus.

The screen state information is used to characterize a state of the wearable apparatus, and the state may include a screen-on state and a screen-off state. The screen-on state is a state that screen backlight of the wearable apparatus is on-state when the wearable apparatus runs. The screen-off state is a state that the screen backlight of the wearable apparatus is off-state when the wearable apparatus runs. In some embodiments, the wearable apparatus may detect the current screen state information.

Operation 106 may include: determining the data to be transmitted according to the current screen state information of the wearable apparatus and the data type to be transmitted, and transmitting the data to be transmitted from the first operation system of the wearable apparatus to the second operation system of the wearable apparatus; a power consumption of the first operation system is lower than a power consumption of the second operation system.

Specifically, the operation system may be: determining whether reporting the data and amount of the data according to the current screen state information of the wearable apparatus and the data type to be transmitted. In some embodiments, the wearable apparatus may determine the data to be transmitted according to the current screen state information of the wearable apparatus and the data type to be transmitted and transmit the data to be transmitted from the first operation system to the second operation system.

In the embodiments, the data transmission method includes: obtaining the type of data to be transmitted; detecting the current screen state information of the wearable apparatus; and determining the data to be transmitted according to the current screen state information of the wearable apparatus and the data type to be transmitted, and transmitting the data to be transmitted from the first operation system of the wearable apparatus to the second operation system of the wearable apparatus; the power consumption of the first operation system is lower than the power consumption of the second operation system. In this way, by controlling the data transmitting between the first operation system and the second operation system according to the type of data to be transmitted and the screen state information of the wearable apparatus, orderly transmission of data between the two operation systems is implemented, and stability of data transmission between the two operation systems is improved.

In some embodiments, the determining the data to be transmitted according to the current screen state information of the wearable apparatus and the data type to be transmitted, may include: determining a single-batch data of a first data type as the data to be transmitted in response to the current screen information of the wearable apparatus indicating a screen-on state and the type of data to be transmitted being the first data type.

The single-batch data of the first data type is data of the first data reported to the second operation system at the preset interval. The preset interval may be the same as the preset period. For example, the preset interval and the preset period may be set as one second.

Specifically, the data of the first data type has a real-time characteristic, and the data of the first data type may be used to real-timely refresh a display interface of the second operation system. In response to the current screen state information of the wearable apparatus indicating the screen-on state, the data of the first data type may be reported to the second operation system. In this way, the users can see the real-timely data of the first data type when the current screen state information of the wearable apparatus indicates the screen-on state.

In the embodiments, the data transmission method includes: determining the single-batch data of the first data type as the data to be transmitted in response to the current screen information of the wearable apparatus indicating the screen-on state and the type of data to be transmitted being the first data type. In this way, when the current screen information of the wearable apparatus indicates the screen-on state, the real-time characteristic of the data of the first data type can be ensured.

In some embodiments, the data transmission method may further include: not transmitting the data of the first data type in response to the current screen information of the wearable apparatus indicating a screen-off state and the type of data to be transmitted being the first data type.

Specifically, not reporting the data of the first data type in response to the current screen state information of the wearable apparatus indicates the screen-off state and the first data type is the type of data to be transmitted. In this way, when the current screen state information of the wearable apparatus indicates the screen-off state, wakened number of the second operation system is decreased, and the power consumption of the second operation system is reduced.

In the embodiments, the data transmission method includes: not transmitting the data of the first data type in response to the current screen information of the wearable apparatus indicating the screen-off state and the type of data to be transmitted being the first data type. In this way, a power consumption of the wearable apparatus is saved when the current screen information of the wearable apparatus indicating the screen-off state.

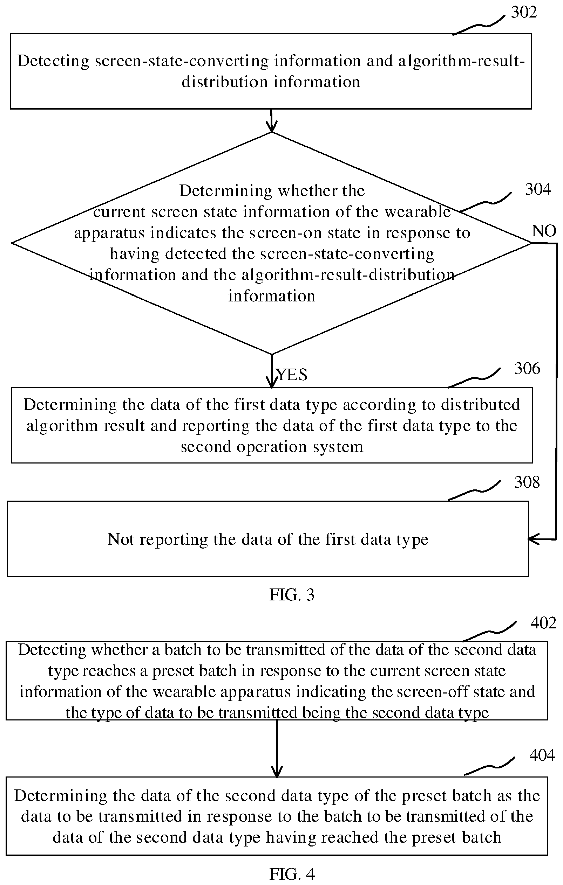

In some embodiments, as shown in FIG. 3, the FIG. 3 is a flowchart of reporting the data of the first data type. The method may include following operations.

Operation 302 may include: detecting screen-state-converting information and algorithm-result-distribution information.

The screen-state-converting information may be used to characterize converting the screen state information of the wearable apparatus, and the algorithm-result-distribution information may be use to characterize completing algorithm result. Specifically, the first operation system may filter digital models of the all sensors and obtain the algorithm results. Then the first operation system may distribute the algorithm results and determine the data to be transmitted according to the distributed algorithm results. Purpose of distributing the algorithm result is managing the algorithm results and providing distribution results corresponding to the functions according to calling different functions. Optionally, an interval of distributing algorithm results may be the same as the interval of reporting the data of the first data type.

Operation 304 may include: determining whether the current screen state information of the wearable apparatus indicates the screen-on state in response to having detected the screen-state-converting information and the algorithm-result-distribution information.

In response to the current screen state information of the wearable apparatus indicating the screen-on state, performing operation 306, i.e., determining the data of the first data type according to distributed algorithm results and reporting the data of the first data type to the second operation system.

Alternatively, in response to the current screen state information of the wearable apparatus not indicating the screen-on state, performing operation 308, i.e., not reporting the data of the first data type.

In the embodiments, in response to the current screen state information of the wearable apparatus indicates the screen-on state and reporting the data of the first data type from the first operation system to the second operation system, which may ensure the real-time characteristic of the data of first data type. In response to the current screen state information of the wearable apparatus indicates the screen-off state, the wakened number of the second operation system may be decreased and the power consumption of the second operation system may be reduced.

In some embodiments, as shown in FIG. 4, the determining the data to be transmitted according to the current screen state information of the wearable apparatus and the data type to be transmitted may include following operations.

Operation 402 may include: detecting whether a batch to be transmitted of the data of the second data type reaches a preset batch in response to the current screen state information of the wearable apparatus indicating the screen-off state and the type of data to be transmitted being the second data type.

The interval of reporting second data type may be the predetermined interval, and the predetermined interval may be the same as the predetermined period. For example, the predetermined interval and the predetermined period may be three seconds. When the data of the second data type is reported to the second operation system at the predetermined interval, a batch of the data of the second data type is a transmitted batch. When the data of the second data type is not reported to the second operation system at the predetermined interval, a batch of the data of the second data type is a batch to be transmitted. The preset batch may be set according to practical application. For example, the preset batch may be set as three to five batches.

Operation 404 may include: determining the data of the second data type of the preset batch as the data to be transmitted in response to the batch to be transmitted of the data of the second data type having reached the preset batch.

Specifically, detecting whether the batch to be transmitted of the data of the second data type reaches the preset batch in response to the current screen state information of the wearable apparatus indicating the screen-off state; reporting the batch to be transmitted of the data of the second data type reach the preset batch to the second operation system in response to the batch to be transmitted of the data of the second data type having reached the preset batch. In this way, in response to the current screen state information of the wearable apparatus indicating the screen-off state, accumulating the data of the second data type to the preset batch and then reporting batch of the data of the second data type, which may decrease the wakened number of the second operation system and reduce the power consumption of the second operation system.

In the embodiments, the data transmission method includes: detecting whether the batch to be transmitted of the data of the second data type reaches the preset batch in response to the current screen state information of the wearable apparatus indicating the screen-off state and the type of data to be transmitted being the second data type; determining the data of the second data type of the preset batch as the data to be transmitted in response to the batch to be transmitted of the data of the second data type having reached the preset batch. In this way, the power consumption of the wearable apparatus is saved when the current screen state information of the wearable apparatus indicating the screen-off state.

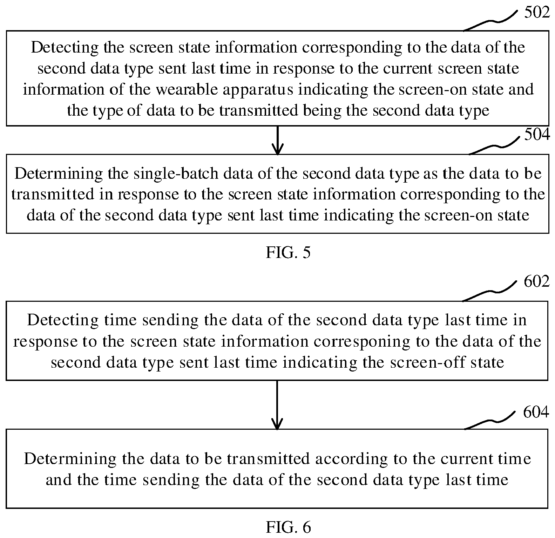

In some embodiments, as shown in FIG. 5, the determining the data to be transmitted according to the current screen state information of the wearable apparatus and the data type to be transmitted may include following operations.

Operation 502 may include: detecting the screen state information corresponding to the data of the second data type sent last time in response to the current screen state information of the wearable apparatus indicating the screen-on state and the type of data to be transmitted being the second data type. Operation 504 may include: determining the single-batch data of the second data type as the data to be transmitted in response to the screen state information corresponding to the data of the second data type sent last time indicating the screen-on state.

The single-batch data of the second data type is data reported to the second operation system at the preset interval.

Specifically, the data of the second data type has the accumulated characteristic. When the current screen state information of the wearable apparatus is screen-on state and the screen state information corresponding to the data of the second data type sent last time also indicates screen-on state, there may be no the data of the second data type of the batch to be transmitted, and the single-batch data of the second data type may be directly reported to the second operation system. In this way, when the current screen state information of the wearable apparatus indicates screen-on state, the users can see the data of the second data type updating in time.

In the embodiments, the data transmission method includes: detecting the screen state information corresponding to the data of the second data type sent last time in response to the current screen state information of the wearable apparatus indicating the screen-on state and the data to be transmitted being the second data type; determining the single-batch data of the second data type as the data to be transmitted in response to the screen state information corresponding to the data of the second data type sent last time indicating the screen-on state. In this way, when the current screen state information of the wearable apparatus indicates screen-on state, the data of the second data type is ensured updating in time.

In some embodiments, as shown in FIG. 6, the method further may include following operations.

Operation 602 may include: detecting time sending the data of the second data type last time in response to the screen state information corresponding to the data of the second data type sent last time indicating the screen-off state.

In some embodiments, the first operation system may store timestamp every time the first operation system reports the data of the second data type.

Operation 604 may include: determining the data to be transmitted according to the current time and the time sending the data of the second data type last time.

Specifically, when the current screen state information of the wearable apparatus indicates screen-on state but the screen state information corresponding to the data of the second data type sent last tine indicates the screen-off state, there is the data of the second data type of the batch to be transmitted. Data of the second data type accumulated from the time sending the data of the second data type last time to the current time may be reported to the second operation system, and the batch to be transmitted is smaller than the preset batch. In this way, when the current screen state information of the wearable apparatus indicates screen-on state, the users can see the data of the second data type updating in time.

In the embodiments, the data transmission method includes: detecting the time sending the data of the second data type last time in response to the screen state information corresponding to the data of the second data type sent last time indicating the screen-off sate; determining the data to be transmitted according to the current time and the time sending the data of the second data type last time. In this way, when the current screen state information of the wearable apparatus indicates screen-on state, the data of the second data type may be updated in time.

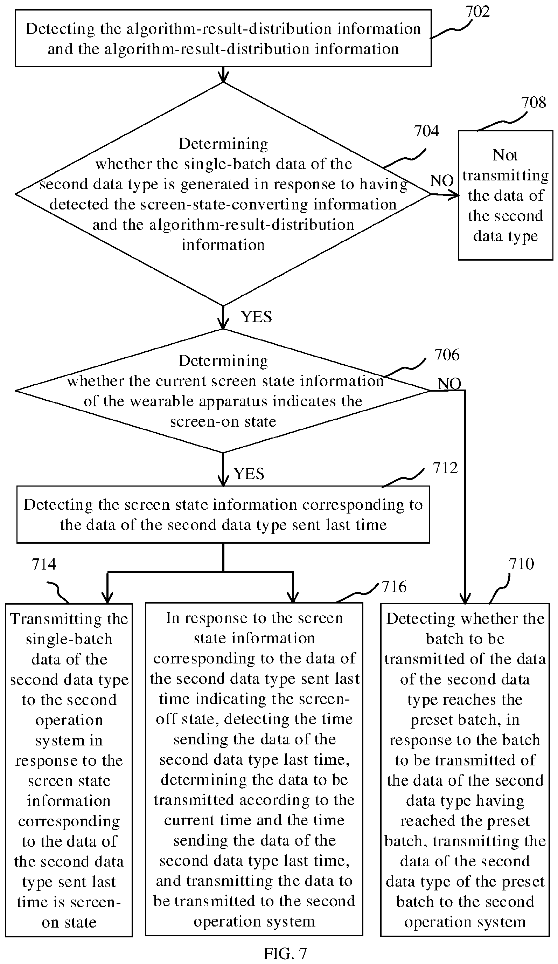

In some embodiments, as shown in FIG. 7, FIG. 7 is a flowchart of reporting the data of the second data type. The method may include following operations.

Operation 702 may include: detecting the algorithm-result-distribution information and the algorithm-result-distribution information.

Operation 704 may include: determining whether the single-batch data of the second data type is generated in response to having detected the screen-state-converting information and the algorithm-result-distribution information.

In response to the single-batch data of the second data type being generated, performing operation 706, i.e., determining whether the current screen state information of the wearable apparatus indicates the screen-on state. In response to the single-batch data of the second data type not being generated, performing operation 708, i.e., not transmitting the data of the second data type.

Further, in response to the current screen state information of the wearable apparatus indicating screen-off state, performing operation 710, i.e., detecting whether the batch to be transmitted of the data of the second data type reaches the preset batch, in response to the batch to be transmitted of the data of the second data type having reached the preset batch, transmitting the data of the second data type of the preset batch to the second operation system.

Alternatively, in response to the current screen state information of the wearable apparatus indicating screen-on state, performing operation 712, i.e., detecting the screen state information corresponding to the data of the second data type sent last time.

Performing operation 714, i.e., transmitting the single-batch data of the second data type to the second operation system in response to the screen state information corresponding to the data of the second data type sent last time indicates screen-on state. Alternatively, performing operation 716, i.e., in response to the screen state information corresponding to the data of the second data type sent last time indicating the screen-off state, detecting the time sending the data of the second data type last time, determining the data to be transmitted according to the current time and the time sending the data of the second data type last time, and transmitting the data to be transmitted to the second operation system.

In the embodiments, the data transmission method may include: in response to reporting the data of the second data type from the first operation system to the second operation system and the current screen state information of the wearable apparatus indicating the screen-on state, the data of the second data type is ensured updating in time. In response to reporting the data of the second data type from the first operation system to the second operation system and the current screen state information of the wearable apparatus indicating the screen-off state, the waken number of the second operation system is decreased and the power consumption of the second operation system is reduced.

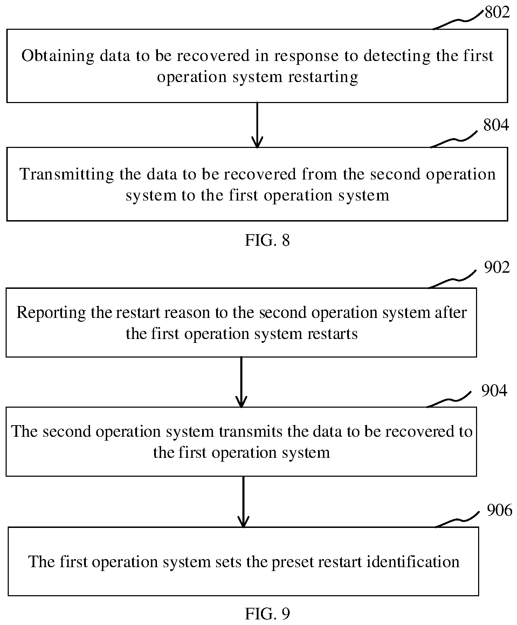

In some embodiments, as shown in FIG. 8, the method may include following operations.

Operation 802 may include: obtaining data to be recovered in response to detecting the first operation system restarting.

The data to be recovered is the data of the second data type that the first operation system has reported to the second operation system during a period of transmitting data.

Specifically, the first operation system may add timers in some threads. When the timers are detected overrunning time, it indicates that the threads are blocked. At this time, the first operation system may write restart reason in flash memory and restart. After the first operation system successfully restart, the first operation system may read the restart reason from the flash memory and report the restart reason to the second operation system. Then the second operation system may broadcast the restart reason to enable various functions to perform different acts according to the restart reason. Since the second data type has the accumulated characteristic, when data of the second data type previously reported to the second operation system dose not recovered after the first operation system restarts, data of the second data type reported later will be inaccurate.

Operation 804 may include: transmitting the data to be recovered from the second operation system to the first operation system.

Specifically, the second operation system may transmit the data to be recovered from the second operation system to the first operation system. The first operation system may store the data to be recovered, then determine data of the second data type to be reported according to the data to be recovered and a newly detected data of the second data type, and continue to report the data of the second data type to the second operation system.

In the embodiments, the data transmission method includes: obtaining the data to be recovered in response to detecting the first operation system restarting; transmitting the data to be recovered from the second operation system to the first operation system. In this way, after the first operation system restarts, accuracy of the data of the second data type can be ensured.

In some embodiments, the method may include: setting a preset restart identification in response to the first operation system receiving the data to be recovered.

The preset restart identification may be used to indicate that the first operation system generates the data of the second data type based on the data to be recovered.

In some embodiments, as shown in FIG. 9, FIG. 9 is flowchart of the first operation system restarting. The method may include following operations.

Operation 902 may include: reporting the restart reason to the second operation system after the first operation system restarts.

Operation 904 may include: the second operation system transmits the data to be recovered to the first operation system.

Operation 906 may include: the first operation system sets the preset restart identification.

In the embodiments, the data transmission includes: setting the preset restart identification in response to the first operation system receiving the data to be recovered. In this way, after the first operation system restarts, the first operation system may read the data to be recovered according to the preset restart identification and generate the data of the second data type based on the data to be recovered, such that the accuracy of the data of the second data type can be ensured.

In some embodiments, the method may further include: in response to detecting the preset restart identification, determining the data of the second data type according to the data to be recovered and clearing the preset restart identification.

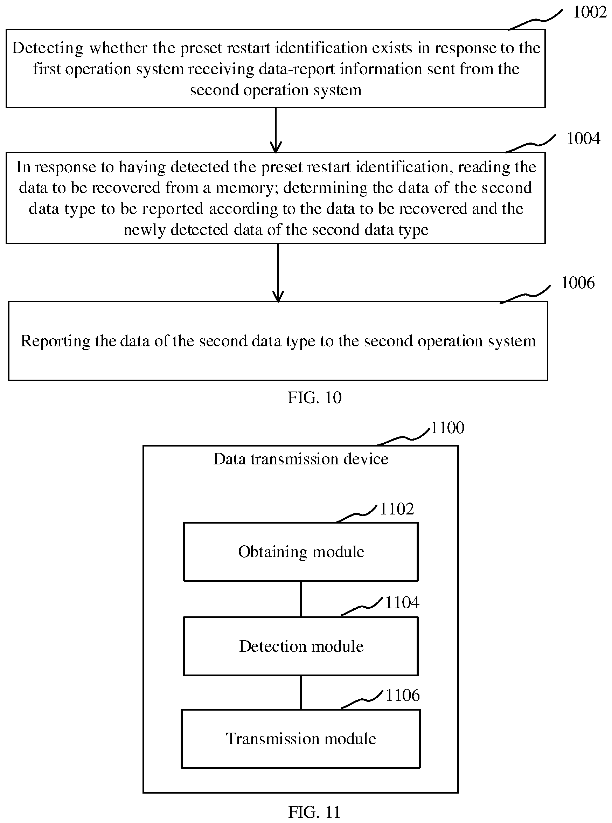

In some embodiments, as shown in FIG. 10, FIG. 10 is a flowchart of the first operation system restarting. The method may include following operations.

Operation 1002 may include: detecting whether the preset restart identification exists in response to the first operation system receiving data-report information sent from the second operation system.

Operation 1004 may include: in response to having detected the preset restart identification, reading the data to be recovered from a memory; determining the data of the second data type to be reported according to the data to be recovered and the newly detected data of the second data type.

Operation 1006 may include: reporting the data of the second data type to the second operation system.

In the embodiments, the data transmission method includes: determining the data of the second data type according to the data to be recovered and clearing the preset restart identification, in response to having detected the preset restart identification. In this way, after the first operation system restarts, the accuracy of the data of the second data type can be ensured.

In some embodiments, the data transmission method is provided, the wearable apparatus includes the first operation system and the second operation system. The power consumption of the first operation system is lower than that of the second operation system. The first operation system is supported by the first chip, and the second operation system is supported by the second chip. The power consumption of the chip is lower than that of the second chip. The first operation system communicates with the mobile terminal through the first Bluetooth, and the second operation system communicates with the mobile terminal through the second Bluetooth. The power consumption of the first Bluetooth is lower than that of the second Bluetooth. The method may include following operations.

Obtaining the type of data to be transmitted.

Next, detecting the current screen state information of the wearable apparatus.

Further, in response to the current screen state information of the wearable apparatus indicating screen-on state and the type of data to be transmitted being the first data type, sending the single-batch data of the first data type to the second operation system. The single-batch data of the first data type is the data reported to the second operation system at the preset interval.

Alternatively, in response to the current screen state information of the wearable apparatus indicating the screen-off state and the type of data to be transmitted being the first data type, not transmitting the data of the first data type.

Alternatively, in response to the current screen state information of the wearable apparatus indicating the screen-off state and the type of data to be transmitted being the second data type, detecting whether the batch to be transmitted of the data of the second data type reaches the preset batch; in response to the batch to be transmitted of the data of the second data type having reached the preset batch, sending the data of the second data type of the preset batch to the second operation system.

Alternatively, in response to the current screen state information of the wearable apparatus indicating the screen-on state and the type of data to be transmitted being the second data type, detecting the screen state information corresponding to the data of the second data type sent last time; in response to the screen state information corresponding to the data of the second data type sent last time indicating the screen-on state, sending the single-batch data of the second data type to the second operation system. The single-batch data of the second data type is the data reported to the second operation system at the preset interval.

Alternatively, in response to the screen state information corresponding to the data of the second data type sent last time indicating screen-off state, detecting the time sending the data of the second data type last time, determining the data to be transmitted according to the current time and the time sending the data of the second data type last time, and sending the data to be transmitted to the second operation system.

In the data transmission method according to the embodiments of the present disclosure, when the first operation system reports the data of the first data type to the second operation system and the screen state information of the wearable apparatus indicating screen-on state, the real-time characteristic of the data of the first data type can be ensured. When the first operation system reports the data of the first data type to the second operation system and the screen state information corresponding to the wearable apparatus indicating screen-off state, the waken number of the second operation system can be decreased and the power consumption of the power can be reduced. When the first operation system reports the data of the second data type to the second operation system and the screen state information of the wearable apparatus indicating screen-on state, the data of the data type can be ensured updating in time. When the first operation system reports the data of the second data type to the second operation system and the screen state information of the wearable apparatus indicating screen-off state, the waken number of the second operation system can be decreased and the power consumption of the power can be reduced.

It should be understood that, although operations in flowchart of FIGS. 1 to 10 arranged according to indication of arrows, the operations are not necessarily performed in order of the indication of the arrows. The operations are not strictly performed in order unless specified in the present disclosure, and the operations may be performed in other orders. Moreover, at least part of the operations in FIGS. 1 to 10 may include multiple refinement operations or multiple stages. The refinement operations or the stages are not necessarily performed at same time, they may be performed at different time. The refinement operations or the stages are not necessarily performed in sequence, and they may be performed by taking turns or alternating with other operations or a part of refinement operations or stages of other operations.

FIG. 11 is a structural block diagram of a data transmission device according to an embodiment. As shown in FIG. 11, a data transmission device 1100 may include an obtaining module 1102, a detection module 1104, and a transmission module 1106.

The obtaining module 1102 is configured to obtain the type of data to be transmitted.

The detection module 1104 is configured to detect the current screen state information of the wearable apparatus.

The transmission module 1106 is configured to determine the data to be transmitted according to the current screen state information of the wearable apparatus and the data type to be transmitted and transmit the data to be transmitted from the first operation system of the wearable apparatus to the second operation system. The power consumption of the first operation system is lower than the power consumption of the second operation system.

The data transmission device 1100 in the embodiments may obtain the type of data to be transmitted, detect the current screen state information of the wearable apparatus, determine the data to be transmitted according to the current screen state information of the wearable apparatus and the data type to be transmitted, and transmit the data to be transmitted from the first operation system of the wearable apparatus to the second operation system of the wearable apparatus. In this way, by controlling the data transmitting between the first operation system and the second operation system according to the type of data to be transmitted and the screen state information of the wearable apparatus, the orderly transmission of the data between the two operation systems can be implemented, and the stability of data transmission between the two operation systems can be improved.

In some embodiments, the transmission module 1106 may be further configured to: determine the single-batch data of the first data type as the data to be transmitted in response to the current screen information of the wearable apparatus indicating the screen-on state and the type of data to be transmitted being the first data type. The single-batch data of the first data type is the data reported to the second operation system at the preset interval.

In the embodiments, determining the single-batch data of the first data type as the data to be transmitted in response to the current screen information of the wearable apparatus indicating the screen-on state and the type of data to be transmitted being the first data type. In this way, when the current screen information of the wearable apparatus indicates the screen-on state, real-time characteristic of the data of the first data type can be ensured.

In some embodiments, the transmission module 1106 may be further configured to: not transmitting the data of the first data type in response to the current screen information of the wearable apparatus indicating a screen-off state and the type of data to be transmitted being the first data type.

In the embodiments, not transmitting the data of the first data type in response to the current screen information of the wearable apparatus indicating a screen-off state and the type of data to be transmitted being the first data type. In this way, the power consumption of the wearable apparatus is saved when the current screen information of the wearable apparatus indicating the screen-off state.

In some embodiments, the transmission module 1106 may be further configured to: detect whether the batch to be transmitted of the data of the second data type reaches the preset batch in response to the current screen state information of the wearable apparatus indicating the screen-off state and the type of data to be transmitted being the second data type, determine the data of the second data type of the preset batch as the data to be transmitted in response to the batch to be transmitted of the data of the second data type having reached the preset batch.

In the embodiments, detecting whether the batch to be transmitted of the data of the second data type reaches the preset batch in response to the current screen state information of the wearable apparatus indicating the screen-off state and the type of data to be transmitted being the second data type; determining the data of the second data type of the preset batch as the data to be transmitted in response to the batch to be transmitted of the data of the second data type having reached the preset batch. In this way, the power consumption of the wearable apparatus is saved when the current screen state information of the wearable apparatus indicating the screen-off state.

In some embodiments, the transmission module 1106 may be further configured to: detect the screen state information corresponding to the data of the second data type sent last time in response to the current screen state information of the wearable apparatus indicating the screen-on state and the data to be transmitted being the second data type; determine the single-batch data of the second data type as the data to be transmitted in response to the screen state information corresponding to the data of the second data type sent last time indicating the screen-on state. The single-batch data of the second data type is data reported to the second operation system at the preset interval.

In the embodiments, detecting the screen state information corresponding to the data of the second data type sent last time in response to the current screen state information of the wearable apparatus indicating the screen-on state and the data to be transmitted being the second data type; determining the single-batch data of the second data type as the data to be transmitted in response to the screen state information corresponding to the data of the second data type sent last time indicating the screen-on state. In this way, when the current screen state information of the wearable apparatus indicates screen-on state, the data of the second data type can be ensured updating in time.

In some embodiments, the transmission module 1106 may be further configured to: detect the time sending the data of the second data type last time in response to the screen state information corresponding to the data of the second data type sent last time indicating the screen-off sate; determine the data to be transmitted according to the current time and the time sending the data of the second data type last time.

In the embodiments, detecting the time sending the data of the second data type last time in response to the screen state information corresponding to the data of the second data type sent last time indicating the screen-off sate; determining the data to be transmitted according to the current time and the time sending the data of the second data type last time. In this way, when the current screen state information of the wearable apparatus indicates screen-on state, the data of the second data type may be updated in time.

In some embodiments, the data transmission device 1100 may further include a restarting module configured to: obtain the data to be recovered in response to detecting the first operation system restarting; transmit the data to be recovered from the second operation system to the first operation system.

In the embodiments, obtaining the data to be recovered in response to detecting the first operation system restarting; transmitting the data to be recovered from the second operation system to the first operation system. In this way, after the first operation system restarts, the accuracy of the data of the second data type can be ensured.

In some embodiments, the restarting module may further be configured to: set the preset restart identification in response to the first operation system having received the data to be recovered; determine the data of the second data type according to the data to be recovered and clear the preset restart identification, in response to having detected the preset restart identification.

In the embodiments, setting the preset restart identification in response to the first operation system having received the data to be recovered; determining the data of the second data type according to the data to be recovered and clearing the preset restart identification, in response to having detected the preset restart identification. In this way, after the first operation system restarts, the accuracy of the data of the second data type can be ensured.

Limitation of the data transmission device may be referred to limitation of the data transmission method mentioned above, which is not described in details here. Various modules configured in the data transmission device may be partly or fully implemented through software, hardware, or combination of the software and the hardware. The various modules may be embedded in or independent of a processor of a computer in form of the hardware, and the various modules may also be stored in a memory of the computer in form of the software, which is conductive for the processor to invoke the various modules to perform operations corresponding to the various modules.

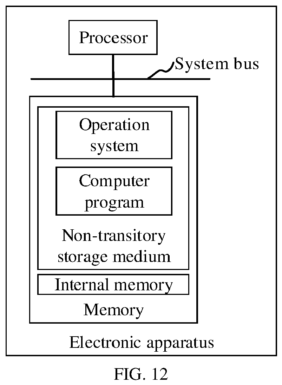

FIG. 12 is a structural block diagram of an interior of the wearable apparatus according to an embodiment of the present disclosure. As shown in FIG. 12, the wearable apparatus may include a processor and a memory connected to the processor through a system bus. The processor may be configured to provide a capability of computing and controlling, and support operations of the wearable apparatus. The memory may include a non-transitory storage medium and an internal memory. The non-transitory storage medium may store an operation system and a computer program. The computer program may be executed by the processor to implement the data transmission method mentioned above. The internal memory may provide a running environment of cache for the operation system in the non-transitory storage medium.

The various modules of the data transmission device in embodiments of the present disclosure may be implemented in form of computer programs. The computer programs may run in a terminal or a server. The modules in form of the computer programs may be stored a memory of the terminal or the server. The computer programs may implement the operations in embodiments of the present disclosure in response to being executed by the processor.

A computer readable storage medium is provided in some embodiments of the present disclosure. One or more non-transitory computer readable storage medium including computer executable instruction may enable one of more processors to perform the operations of the data transmission method in response to the computer executable instruction being executed by the one or more processors.

A computer program product including instruction may enable the computer to perform the data transmission method in response to running in a computer.

The memory, the storage medium, the data base and other mediums in the embodiments of the present disclosure may include non-transitory memories and transitory memories. The non-transitory memories may include a read only memory (ROM), a programmable ROM (PROM), an electrically PROM (EPROM), an electrically erasable PROM (EEPROM), or a flash memory. The transitory memory may include random access memory (RAM) served as an external cache memory. It should be noted that, the RAM has various forms, such as a static RAM (SRAM), a dynamic RAM (DRAM), a synchronous DRAM (SDRAM), a dual data rate SDRAM (DDR SDRAM), an enhanced SDRAM (ESDRAM), a sync link DRAM (SLDRAM), a Rambus direct RAM (RDRAM), a direct Rambus dynamic RAM (DRDRAM), and a Rambus dynamic RAM (RDRAM).

Above embodiments only describe some embodiments of the present disclosure. Although the specification is detailed, it can not be understood as limitation of scope of the present disclosure. It should be pointed that, for those skilled in the art, several modifications and improvements can be made without departing from the concept of the present disclosure, which belong to the scope of the present disclosure. Therefore, the scope of the present disclosure shall be referred to the attached claims.

## Claims

1. A data transmission method, **characterized by** comprising:
obtaining a type of data to be transmitted;
detecting current screen state information of a wearable apparatus; and
determining data to be transmitted according to the current screen state information of the wearable apparatus and the type of data to be transmitted, and transmitting the data to be transmitted from a first operation system of the wearable apparatus to a second operation system of the wearable apparatus, wherein a power consumption of the first operation system is lower than a power consumption of the second operation system.

2. The data transmission method as claimed in claim 1, wherein the determining the data to be transmitted according to the current screen state information of the wearable apparatus and the type of data to be transmitted, comprises:
determining a single-batch data of a first data type as the data to be transmitted in response to the current screen information of the wearable apparatus indicating a screen-on state and the type of data to be transmitted being the first data type, wherein the single-batch data of a first data type is data reported to the second operation system at a preset interval.

3. The data transmission method as claimed in claim 1, further comprising:
not transmitting data of a first data type in response to the current screen information of the wearable apparatus indicating a screen-off state and the type of data to be transmitted being the first data type.

4. The data transmission method as claimed in claim 1, wherein the determining the data to be transmitted according to the current screen state information of the wearable apparatus and the data type to be transmitted, comprises:
detecting whether a batch to be transmitted of a data of a second data type reaches a preset batch in response to the current state information of the wearable apparatus indicating a screen-off state and the data to be transmitted being a second data type; and
determining the data of the second data type of the preset batch as the data to be transmitted in response to the batch to be transmitted of the data of the second type having reached the preset batch.

5. The data transmission method as claimed in claim 1, wherein the determining the data to be transmitted according to the current screen state information of the wearable apparatus and the data type to be transmitted, comprises:
detecting the screen state information corresponding to data of a second data type sent last time in response to the current screen state information of the wearable apparatus indicating a screen-on state and the type of data to be transmitted being a second data type; and
determining a single-batch data of the second data type as the data to be transmitted in response to the screen state information corresponding to the data of the second data type transmitted last time indicating the screen-on state, wherein the single-batch data of the second data type is data reported to the second operation system after a preset interval.

6. The data transmission method as claimed in claim 5, further comprising:
detecting a time of the data of the second data type sent last time in response to the screen state information corresponding to the data of the second data type sent last time indicating a screen-off state; and
determining the data to be transmitted according to a current time and the time sending the data of the second data type last time.

7. The data transmission method as claimed in claim 1, further comprising:
obtaining data to be recovered in response to detecting the first operation system restarting; and
transmitting the data to be recovered from the second operation system to the first operation system.

8. The data transmission method as claimed in claim 7, further comprising:
setting a preset restart identification in response to the first operation system having received the data to be recovered; and
determining data of a second data type according to the data to be recovered and clearing the preset restart identification, in response to detecting the preset restart identification.

9. The data transmission method as claimed in claim 1, wherein the type of data to be transmitted comprises a first data type and a second data type, and the second data type is determined according to the first data type.

10. The data transmission method as claimed in claim 1, wherein the first operation system is supported by a first chip, and the second operation system is supported by a second chip;
wherein a power consumption of the first chip is lower than a power consumption of the second chip.

11. The data transmission method as claimed in claim 1, wherein the first operation system communicates with a mobile terminal through a first Bluetooth, and the second operation system communicates with the mobile terminal through a second Bluetooth;
wherein a power consumption of the first Bluetooth is lower than a power consumption of the second Bluetooth.

12. A data transmission device, comprising:
an obtaining module, configured to obtain a type of data to be transmitted;
a detection module, configured to detect current screen state information of a wearable apparatus; and
a transmission module, configured to determine the data to be transmitted according to the current screen state information of the wearable apparatus and the data type to be transmitted, and transmitting the data to be transmitted from a first operation system of the wearable apparatus to a second operation system;
wherein a power consumption of the first operation system is lower than a power consumption of the second operation system.

13. The data transmission device as claimed in claim 12, wherein the transmission module is further configured to: determine a single-batch data of a first data type as the data to be transmitted in response to the current screen information of the wearable apparatus indicating a screen-on state and the type of data to be transmitted being the first data type;
wherein the single-batch data of the first data type is data reported to the second operation system at a preset interval.

14. The data transmission device as claimed in claim 12, wherein the transmission module is further configured to: not transmitting data of a first data type in response to the current screen information of the wearable apparatus indicating a screen-off state and the type of data to be transmitted being the first data type.

15. The data transmission device as claimed in claim 12, wherein the transmission module is configured to:
detect whether a batch to be transmitted of data of a second data type reach a preset batch in response to the current state information of the wearable apparatus indicating a screen-off state and the data to be transmitted being the second data type; and
determine the data of the second data type of the preset batch as the data to be transmitted in response to the batch to be transmitted of the data of the second type having reached the preset batch.

16. The data transmission device as claimed in claim 12, wherein the transmission module is configured to:
detect screen state information corresponding to data of a second data type sent last time in response to the current screen state information of the wearable apparatus indicating a screen-on state and the type of data to be transmitted being a second data type; and
determine a single-batch data of the second data type as the data to be transmitted in response to the screen state information corresponding to the data of the second data type sent last time indicating the screen-on state;
wherein the single-batch data of the second data type is data reported to the second operation system after a preset interval.

17. The data transmission device as claimed in claim 16, wherein the transmission module is further configured to:
detect a time sending the data of the second data type last time in response to the screen state information corresponding to the data of the second data type sent last time indicating a screen-off state; and
determine the data to be transmitted according to a current time and the time of the data of the second data type sent last time.

18. The data transmission device as claimed in claim 12, wherein the transmission module further comprises a restarting module configure to:
obtain data to be recovered in response to detecting the first operation system restarting; and
transmit the data to be recovered from the second operation system to the first operation system.

19. The data transmission device as claimed in claim 18, wherein the restarting module is further configured to:
set a preset restart identification in response to the first operation system having received the data to be recovered; and
determine data of a second data type according to the data to be recovered and clear the preset restart identification, in response to detecting the preset restart identification.

20. The data transmission device as claimed in claim 12, wherein the type of data to be transmitted comprises a first data type and a second data type, and the second data type is determined according to the first data type.

21. The data transmission device as claimed in claim 12, wherein the first operation system is supported by a first chip, and the second operation system is supported by a second chip;
Wherein a power consumption of the first chip is lower than a power consumption of the second chip.

22. The data transmission device as claimed in claim 12, wherein the first operation system communicates with a mobile terminal through a first Bluetooth, and the second operation communicates with the mobile terminal through a second Bluetooth;
wherein a power consumption of the first Bluetooth is lower than a power consumption of the second Bluetooth.

23. A wearable apparatus, comprising
a memory; and
a processor;
wherein the memory stores a computer program, the processor executes the computer program to perform operations in the data transmission method as claimed in any one of claims 1 to 11.

24. A computer-readable storage medium, storing a computer program, wherein the program is executed by a processor to implement operations in the data transmission method as claimed in any one of claims 1 to 11.
